# EUROPEAN PATENT APPLICATION

(11) **EP 4 791 072 A1**
(43) Date of publication of application: **12.08.2026**
(21) Application number: 24826850.0
(22) Date of filing: 10.12.2024
(51) Int. Cl.: H04W 28/02, H04L 47/125, H04W 28/086

(54) **PACKET TRANSMISSION METHOD AND APPARATUS, AND DEVICE**

(71) Applicant: New H3C Technologies Co., Ltd., Binjiang District Hangzhou Zhejiang 310052 (CN)
(72) Inventor: GONG, Dafu, Beijing 100102 (CN); ZHENG, Weifu, Beijing 100102 (CN)
(74) Representative: 2SPL Patentanwälte PartG mbB
(86) International application number: PCT/CN2024/138228
(87) International publication number: WO 2026/123216

(57) **Abstract**

The present disclosure provides a packet transmission method, apparatus and device. According to the method, data packets to be sent to a wireless terminal are obtained. If a load of each wireless link is greater than a load threshold and the data packets are high-priority data packets, it is determined whether a target wireless link has been selected for the wireless terminal, if not, a target wireless link is selected from all wireless links corresponding to the wireless terminal, and the data packets and a migration message are sent to an AP corresponding to the target wireless link, so that the AP migrates, based on the migration message, low-priority data packets to other wireless links except the target wireless link for sending, and sends the data packets to the wireless terminal through the target wireless link; if yes, the data packets are sent to an AP corresponding to the target wireless link, so that the AP sends the data packets to the wireless terminal through the target wireless link. According to the technical scheme of the present disclosure, transmission interruption of high-priority data packets may be avoided, and user experience is improved.

## Description

### TECHNICAL FIELD

The present disclosure relates to the field of communication, in particular, to a packet transmission method, apparatus and device.

### BACKGROUND

A wireless local area network (WLAN) may include an access controller (AC) and a plurality of access points (APs).

When a wireless terminal is located within the coverage area of an AP, the wireless terminal establishes a wireless link with the AP. The wireless terminal sends a data packet to the AP through the wireless link, and the wireless terminal receives a data packet sent by the AP through the wireless link. When the wireless terminal roams, that is, the wireless terminal roams from the AP to the coverage area of another AP, the wireless terminal needs to reestablish a wireless link with the another AP. The wireless terminal sends a data packet to the another AP through the re-established wireless link, and the wireless terminal receives a data packet sent by the another AP through the re-established wireless link.

### SUMMARY

The present disclosure provides a packet transmission method, which is applied to an access controller (AC) and includes:
obtaining one or more data packets to be sent to a wireless terminal, where the wireless terminal corresponds to at least two wireless links;
in response to that a load of each wireless link is greater than a load threshold, and the data packets are high-priority data packets, determining whether a target wireless link has been selected for the wireless terminal;
if not, selecting a target wireless link from all wireless links corresponding to the wireless terminal, and sending the data packets and a migration message to an AP corresponding to the target wireless link, so that the AP migrates, based on the migration message, low-priority data packets to other wireless links except the target wireless link for sending, and sends the data packets to the wireless terminal through the target wireless link;
if yes, sending the data packets to an AP corresponding to the target wireless link, so that the AP sends the data packets to the wireless terminal through the target wireless link.

The present disclosure provides a packet transmission apparatus, which is applied to an access controller (AC) and includes:
an obtaining module, which is to obtain one or more data packets to be sent to a wireless terminal, where the wireless terminal corresponds to at least two wireless links;
a determining module, which is to, in response to that a load of each wireless link is greater than a load threshold, and the data packets are high-priority data packets, determine whether a target wireless link has been selected for the wireless terminal;
a processing module, which is to, in response to that the target wireless link has not been selected, select a target wireless link from all wireless links corresponding to the wireless terminal, and send the data packets and a migration message to an AP corresponding to the target wireless link, so that the AP migrates, based on the migration message, low-priority data packets to other wireless links except the target wireless link for sending, and sends the data packets to the wireless terminal through the target wireless link;
in response to that a target wireless link has been selected, send the data packets to an AP corresponding to the target wireless link, so that the AP sends the data packets to the wireless terminal through the target wireless link.

The present disclosure provides an electronic device, which including a processor and a machine-readable storage medium, where the machine-readable storage medium stores machine-executable instructions capable of being executed by the processor; the processor is to execute the machine-executable instructions to perform the packet transmission method according to the examples of the present disclosure.

The present disclosure provides an access controller, which includes a processor and a machine-readable storage medium, where the machine-readable storage medium stores machine-executable instructions capable of being executed by the processor; the processor is to execute the machine-executable instructions to perform the packet transmission method according to the example of the present disclosure.

The present disclosure provides a computer program product including a computer program that, when executed by a processor, causing the processor to perform the packet transmission method according to the example of the present disclosure.

The present disclosure provides a machine-readable storage medium storing machine-executable instructions capable of being executed by a processor, where the processor is configured to execute the machine-executable instructions, and perform the packet transmission method according to the example of the present disclosure when executing the machine-executable instructions.

As can be seen from the above technical solutions, in the examples of the present disclosure, when the load of each wireless link is greater than the load threshold and the data packets are high-priority data packets, low-priority data packets may be migrated to other wireless links except the target wireless link for sending, and high-priority data packets may be sent through the target wireless link, so as to ensure that high-priority data packets are always transmitted through one wireless link (target wireless link), namely, the high-priority data packets are always being preferentially forwarded, and high-priority services can be reliably guaranteed. In the process of ensuring the high-priority services, the transmission interruption of the high-priority data packets can be avoided, the connection stability of the wireless terminal is ensured, the scheduling among multiple wireless links is utilized to solve the problem that high-priority service cannot be ensured reliably when the loads of the wireless links are too high, and the user experience is improved.

### BRIEF DESCRIPTION OF DRAWINGS

FIG. 1A is a schematic flowchart of a packet transmission method according to an example of the present disclosure.
FIG. 1B is a schematic flowchart of a packet transmission method according to an example of the present disclosure.
FIG. 2 is a schematic diagram of a WLAN networking according to an example of the present disclosure.
Fig. 3A is a schematic diagram of a wireless terminal establishing wireless links with two APs.
Fig. 3B is a schematic flowchart of establishing two wireless links between a wireless terminal and two APs.
Fig. 4A is a schematic diagram of a wireless terminal establishing wireless links with a same AP.
Fig. 4B is a schematic flowchart of establishing two wireless links between a wireless terminal and a same AP.
FIG. 5 is a schematic flowchart of a packet transmission method according to an example of the present disclosure.
FIG. 6 is a schematic flowchart of a packet transmission method according to an example of the present disclosure.
FIG. 7A is a schematic structural diagram of a packet transmission apparatus according to an example of the present disclosure.
FIG. 7B is a schematic structural diagram of a packet transmission apparatus according to an example of the present disclosure.
FIG. 8A is a hardware structural diagram of an AC according to an example of the present disclosure.
Fig. 8B is a hardware structural diagram of a wireless terminal according to an example of the present disclosure.

### DETAILED DESCRIPTION

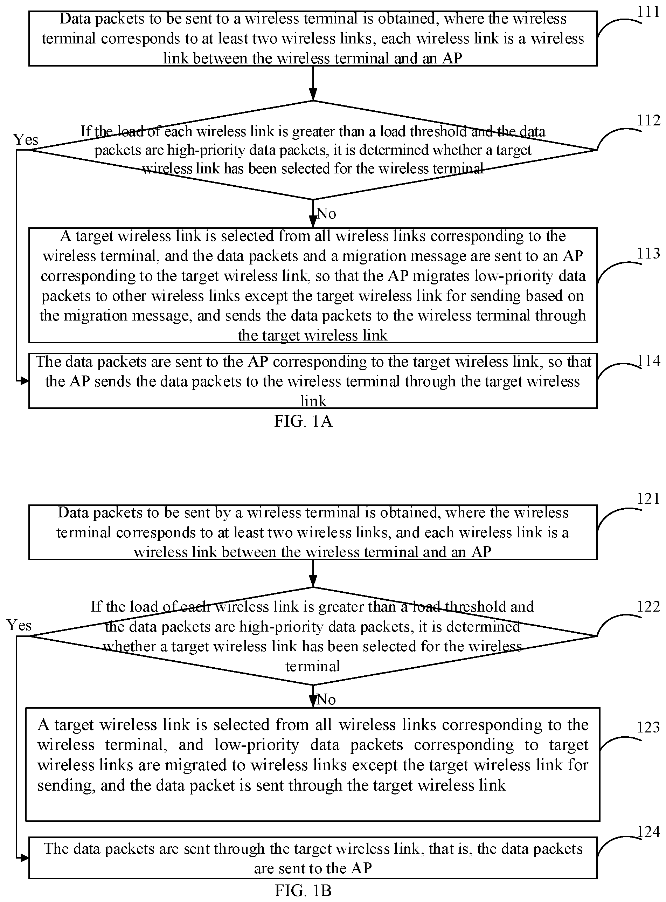

A packet transmission method is provided according to an example of the present disclosure, which may be applied to an AC that manages a plurality of APs. Referring to FIG. 1A, which is a flowchart of the packet transmission method, the method may include the following processes.

In process 111, one or more data packets to be sent to a wireless terminal are obtained, where the wireless terminal corresponds to at least two wireless links, each wireless link is a wireless link between the wireless terminal and an AP, and the AP here is an AP at the opposite end of the wireless link, that is, an AP that establishes a wireless link with the wireless terminal. For example, for each wireless link, one end of the wireless link is a wireless terminal, and the other end of the wireless link is an AP.

In process 112, if the load of each wireless link is greater than a load threshold and the one or more data packets are high-priority data packets, it is determined whether a target wireless link has been selected for the wireless terminal.

If not, process 113 may be executed, and if yes, process 114 may be executed.

In process 113, a target wireless link is selected from all wireless links corresponding to the wireless terminal, and the one or more data packets and a migration message are sent to an AP corresponding to the target wireless link, so that the AP migrates, based on the migration message, low-priority data packets (that is, low-priority data packets corresponding to the target wireless link) to other wireless links except the target wireless link for sending, and sends the one or more data packets to the wireless terminal through the target wireless link.

In process 114, the one or more data packets are sent to the AP corresponding to the target wireless link, so that the AP sends the one or more data packets to the wireless terminal through the target wireless link.

A packet transmission method is provided according to an example of the present disclosure, which may be applied to a wireless terminal (a wireless client). Referring to FIG. 1B, which is a schematic flowchart of the packet transmission method, the method may include the following processes.

In process 121, one or more data packets to be sent by a wireless terminal are obtained, where the wireless terminal corresponds to at least two wireless links, and each wireless link is a wireless link between the wireless terminal and an AP.

In process 122, if the load of each wireless link is greater than a load threshold and the one or more data packets are high-priority data packets, it is determined whether a target wireless link has been selected for the wireless terminal.

If not, process 123 may be executed, and if yes, process 124 may be executed.

In process 123, a target wireless link is selected from all wireless links corresponding to the wireless terminal, and low-priority data packets corresponding to the target wireless link are migrated to wireless links except the target wireless link for sending, and the one or more data packets are sent through the target wireless link, that is, the one or more data packets are sent to the AP.

In process 124, the one or more data packets are sent through the target wireless link, that is, the one or more data packets are sent to the AP.

As can be seen from the above technical solutions, in the examples of the present disclosure, when the load of each wireless link is greater than a load threshold and the one or more data packets are high-priority data packets, low-priority data packets may be migrated to another wireless link except the target wireless link for sending, and the high-priority data packets may be sent through the target wireless link, so as to ensure that high-priority data packets are always sent through a wireless link (a target wireless link), namely, high-priority data packets always keeps being preferentially forwarded, and high-priority services can be reliably guaranteed. In the process of ensuring high-priority services, the transmission interruption of high-priority data packets can be avoided, the connection stability of a wireless terminal is ensured, the scheduling among multiple wireless links is utilized to solve the problem that high-priority services cannot be ensured reliably when the load of the wireless links is too high, and the user experience is improved.

In an example, after an AC obtains one or more data packets to be sent to a wireless terminal, if the load of each wireless link is greater than a load threshold and the one or more data packets are low-priority data packets, it is determined whether a target wireless link has been selected for the wireless terminal. If not, a candidate wireless link is selected from all the wireless links (for example, a wireless link is selected, from all the wireless links, as the candidate wireless link); if yes, the candidate wireless link is selected from other wireless links except the target wireless link (for example, a wireless link is selected, from other wireless links except the target wireless link, as the candidate wireless link). The AC sends the one or more data packets to an AP corresponding to the candidate wireless link, so that the AP sends the one or more data packets to the wireless terminal through the candidate wireless link.

In an example, after a wireless terminal obtains one or more data packets to be sent by the wireless terminal, if the load of each wireless link is greater than a load threshold and the one or more data packets are low-priority data packets, it may be determined whether a target wireless link has been selected for the wireless terminal. If not, the wireless terminal may select a candidate wireless link from all the wireless links (for example, select a wireless link, from all the wireless links, as the candidate wireless link); if yes, the wireless terminal may select a candidate wireless link from other wireless links except the target wireless link (for example, select a wireless link, from other wireless links except the target wireless link, as the candidate wireless link). The wireless terminal sends the one or more data packets through the candidate wireless link.

In an example, after an AC obtains one or more data packets to be sent to a wireless terminal, if the load of only one wireless link among all wireless links is not greater than a load threshold, the AC selects the wireless link as a candidate wireless link (that is, the wireless link whose load is not greater than the load threshold is selected as the candidate wireless link), and sends the one or more data packets to an AP corresponding to the candidate wireless link, so that the AP sends the one or more data packets to the wireless terminal through the candidate wireless link.

In an example, after a wireless terminal obtains one or more data packets to be sent by the wireless terminal, if the load of only one wireless link among all wireless links is not greater than a load threshold, the wireless link is selected as a candidate wireless link, and the one or more data packets are sent through the candidate wireless link, that is, the one or more data packets are sent to an AP through the candidate wireless link.

In an example, after an AC obtains the data packets to be sent to a wireless terminal, if the load of each of K wireless links among all wireless links is not greater than a load threshold, where K may be a positive integer greater than 1, the AC may select all of the K wireless links as candidate wireless links. In addition, the AC may further divide the data packets into K sub-data packets, and send the K sub-data packets to APs corresponding to the K candidate wireless links respectively, so that the corresponding APs send the received sub-data packets by themselves to the wireless terminal.

In an example, after a wireless terminal obtains the data packets to be sent by the wireless terminal, if the load of each of K wireless links among all wireless links is not greater than a load threshold, where K may be a positive integer greater than 1, the wireless terminal may select the K wireless links as candidate wireless links. In addition, the wireless terminal may divide the data packets into K sub-data packets, and send the K sub-data packets through the K candidate wireless links.

In an example, after an AC obtains the data packets to be sent to a wireless terminal, the AC may further obtain the priorities of the data packets by querying a configured mapping table based on data features of the data packets. After a wireless terminal obtains the data packets to be sent by the wireless terminal, the wireless terminal may further obtain the priorities of the data packets by querying a configured mapping table based on a data feature of the data packet. For example, the priority may be a high priority or a low priority. In addition, the mapping table may include a correspondence between a data feature and a priority, and the data feature may include, but is not limited to, five-tuple information and/or a data type.

In an example, for at least two wireless links corresponding to a wireless terminal, the different wireless links may be wireless links between the wireless terminal and a same AP (i.e., at least two wireless links are established between the wireless terminal and the same AP), or, the different wireless links may be wireless links between the wireless terminal and different APs (i.e., at least two wireless links are established between the wireless terminal and multiple APs).

The technical solutions of the examples of the present disclosure are described in the following with reference to specific application scenarios.

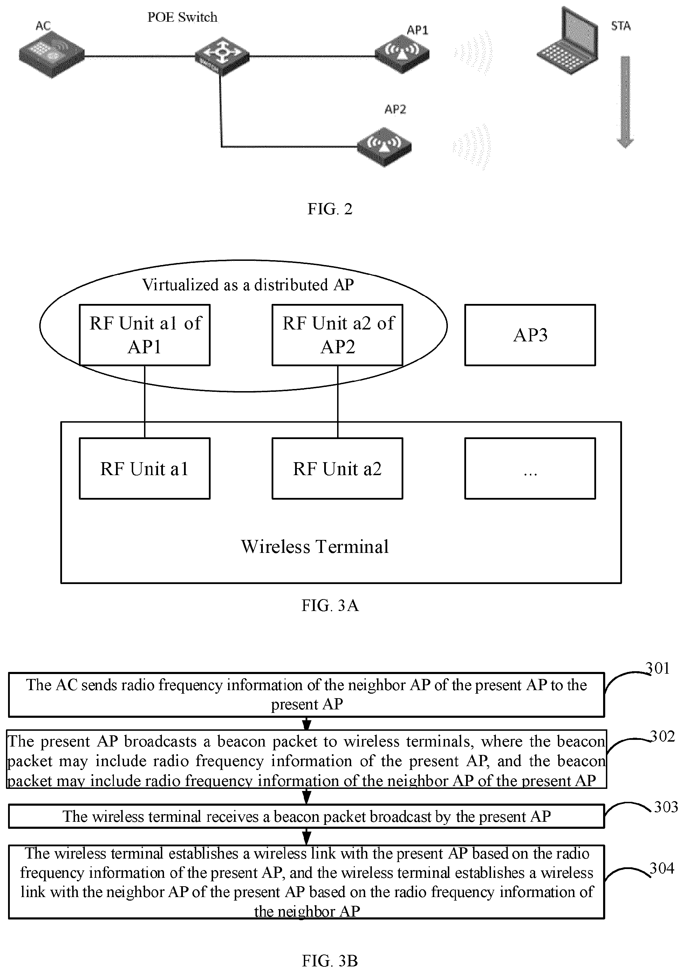

Referring to FIG. 2, which is a schematic diagram of a WLAN networking, the WLAN may include an AC and a plurality of APs managed by the AC, and the APs may be denoted as AP1, AP2, etc. The AC may be connected to each AP through a power over Ethernet (POE) switch or other types of switches.

The wireless terminal (also referred to as a wireless client, STA) may be a notebook computer, a smart phone, etc. The wireless terminal is a terminal that accesses an AP in a wireless manner, and the type of the wireless terminal is not limited.

In an example, at least two wireless links may be established between a wireless terminal and AP, for example, two wireless links may be established between a wireless terminal and AP, or three wireless links or more wireless links may be established between a wireless terminal and AP. Two wireless links established between a wireless terminal and AP is taken as an example.

In an example, two wireless links are established between a wireless terminal and a same AP, i.e., different wireless links are wireless links between the wireless terminal and the same AP. Or, two wireless links are established between a wireless terminal and two APs, that is, different wireless links are wireless links between the wireless terminal and different APs.

In a case of establishing two wireless links between a wireless terminal and two APs, FIG. 3A is a schematic diagram of establishing wireless links between a wireless terminal and two APs. The AC virtualizes a radio frequency unit a1 of AP1 and a radio frequency unit a2 of AP2 as a distributed AP, and the wireless terminal supports the radio frequency units a1 and a2. Based on the radio frequency information of the radio frequency unit a1 of the AP1, the wireless terminal establishes a wireless link (denoted as link 1) with the AP1. Based on the radio frequency information of the radio frequency unit a2 of the AP2, the wireless terminal establishes a wireless link (denoted as link 2) with the AP2.

The process of "establishing two wireless links between a wireless terminal and two APs" is described in the following.

For each of the plurality of APs managed by the AC, the AP may be denoted as the present AP, and the AC may determine a neighbor AP of the present AP from the plurality of APs (the number of neighbor APs may be one or more, and the number of wireless links may be the number of neighbor APs added by 1). For example, assuming that the AC manages AP1, AP2, AP3, and AP4, when AP1 serves as the present AP, the AC determines that the neighbor AP of the present AP is AP2; when AP2 serves as the present AP, the AC determines that the neighbor AP of the present AP is AP1, and so on.

In an example, the AC may determine the neighbor AP of the present AP in the following manners.

Manner 1: For each AP managed by an AC (each AP except the present AP), the AC determines the signal strength of the present AP detected by the AP. If the signal strength is greater than a signal strength threshold (the signal strength threshold may be configured according to experience), it indicates that the distance between the AP and the present AP is relatively short, and the AP serves as a neighbor AP of the present AP. If the signal strength is not greater than the signal strength threshold, it indicates that the distance between the AP and the present AP is far, and the AP does not serve as a neighbor AP of the present AP.

Obviously, after the above process is executed for each AP managed by the AC, neighbor APs of the present AP may be obtained, and the number of the neighbor APs may be one or more, and there may also be no neighbor AP.

With regard to the signal strength of the present AP detected by the AP, the AP may send a probe packet to the present AP, and the present AP determines a signal strength of the probe packet, where the signal strength may be a signal strength measured when the present AP receives the probe packet of the AP. The present AP sends the signal strength of the probe packet to the AC, and the AC may use the signal strength of the probe packet as the signal strength of the present AP detected by the AP.

In some examples, the present AP may further send a probe packet to the AP, and the AP may determine a signal strength of the probe packet, where the signal strength may be a signal strength measured when the AP receives the probe packet of the present AP. Then, the AP may send the signal strength of the probe packet to the AC, and the AC may use the signal strength of the probe packet as the signal strength of the present AP detected by the AP.

In summary, when the AC determines a neighbor AP of the present AP from a plurality of APs, the signal strength of the present AP detected by the neighbor AP may be greater than a signal strength threshold.

Manner 2: For each AP managed by an AC (each AP except the present AP), the AC determines a signal strength of the present AP detected by the AP, and the AC determines the communication quality of the AP.

If the signal strength is greater than a signal strength threshold, it indicates that the distance between the AP and the present AP is relatively short. If the communication quality of the AP is greater than a communication quality threshold, it indicates that the communication quality of the AP is good, and when a data packet is processed by the AP, the communication quality of the data packet may be guaranteed. Based on this, the AP can be used as a neighbor AP of the present AP, so that a wireless terminal may obtain a good use experience. If the signal strength is not greater than the signal strength threshold, and/or the communication quality of the AP is not greater than the communication quality threshold (i.e. the communication quality of the AP is poor), the AP may not be regarded as a neighbor AP of the present AP.

It can be seen that, after the above process is executed for each AP managed by the AC, neighbor APs of the present AP may be obtained, and the number of the neighbor APs may be one or more.

With respect to the communication quality of the AP (which may also be referred to as the network quality), the AP may collect a communication quality index of the AP, and transmit the communication quality index of the AP to the AC, and the AC may determine the communication quality of the AP based on the communication quality index. For example, the communication quality index may include, but is not limited to, at least one of a packet loss rate, a latency, and a jitter, and the AC may determine the communication quality of the AP based on the packet loss rate, the latency, and the jitter. For example, the larger the packet loss rate is, the lower the communication quality is (indicating poor communication quality), and the smaller the packet loss rate is, the greater the communication quality is. The greater the latency is, the lower the communication quality is, and the smaller the latency is, the greater the communication quality is. The larger the jitter is, the lower the communication quality is, and the smaller the delay jitter is, the greater the communication quality is. Of course, the above is only an example of determining the communication quality, and is not limited thereto.

When the AC determines a neighbor AP of the present AP from a plurality of APs, the signal strength of the present AP detected by the neighbor AP may be greater than a signal strength threshold, and the communication quality of the neighbor AP is greater than a communication quality threshold.

For manner 1, since the distance between the present AP and a neighbor AP does not change, after a neighbor AP of the present AP is determined, the neighbor AP does not change. In this way, the AC does not need to re-determine a neighbor AP of the present AP after the neighbor AP of the present AP is determined. For manner 2, since the communication quality of each AP may change, after a neighbor AP of the present AP is determined, the neighbor AP may change. Based on this, the AC may periodically determine a neighbor AP of the present AP, or re-determine a neighbor AP of the present AP when a trigger condition (such as a change in the communication quality of the AP) is met. Based on this, after a neighbor AP of the present AP is determined, the AC needs to re-determine the neighbor AP of the present AP, and when the neighbor AP changes, update the neighbor AP of the present AP.

In an example, after the AC determines a neighbor AP of the present AP from a plurality of APs, the present AP and the neighbor AP may be virtualized as a distributed AP. On the basis of virtualizing the present AP and the neighbor AP as a distributed AP, the present AP and the neighbor AP in the distributed AP provide a joint service for the wireless terminal. For example, by virtualizing the present AP and the neighbor AP as a distributed AP, it indicates that the present AP and the neighbor AP are the same AP, in this way, when wireless service is provided for the wireless terminal through the present AP or the neighbor AP simultaneously, it indicates that the wireless service is provided for the wireless terminal through the same AP, it may be understood that the wireless service is provided for the wireless terminal through a plurality of radio frequency units of the same AP, that is, each AP can be understood as a radio frequency unit in the distributed AP.

When virtualizing the present AP and a neighbor AP as a distributed AP, the AC virtualizes a first radio frequency unit of the present AP (that is, any radio frequency unit supported by the present AP) and a second radio frequency unit of the neighbor AP (that is, any radio frequency unit supported by the neighbor AP) as a distributed AP, and the first and second radio frequency units are different. For example, when AP2 serves as the present AP, the neighbor AP of the present AP is AP1, assuming that both AP1 and AP2 support a radio frequency unit a1, the radio frequency unit a2, the radio frequency unit a3, and the radio frequency unit a4, the radio frequency unit a1 of AP1 and the radio frequency unit a2 of AP2 may be virtualized as a distributed AP. That is, the distributed AP includes a radio frequency unit a1 of AP1 and a radio frequency unit a2 of AP2. On this basis, the wireless service may be provided for the wireless terminal through the radio frequency unit a1 of AP1 and the radio frequency unit a2 of AP2.

In the above application scenario, referring to FIG. 3B, which is a schematic flowchart of establishing two wireless links between a wireless terminal and two APs (the present AP and a neighbor AP of the present AP), the procedure may include the following.

In process 301, the AC sends radio frequency information of the neighbor AP of the present AP to the present AP.

For example, when AP1 serves as the present AP, AP2 is the neighbor AP of AP1, assuming that the AC virtualizes the radio frequency unit a1 of AP1 and the radio frequency unit a2 of AP2 as a distributed AP, the AC sends radio frequency information of the radio frequency unit a2 of AP2 to AP1. The radio frequency information may include, but is not limited to, channel information of the radio frequency unit a2 of AP2 and a basic service set identifier (BSSID) of AP2, where the radio frequency information is not limited, and the BSSID may be understood as a unique identifier for identifying the AP2 in the WLAN.

In process 302, the present AP broadcasts a beacon packet to wireless terminals, where the beacon packet may include radio frequency information of the present AP, and the beacon packet may include radio frequency information of the neighbor AP of the present AP.

For example, when AP1 serves as the present AP, AP1 may broadcast a beacon packet. Assuming that the AC virtualizes the radio frequency unit a1 of AP1 and the radio frequency unit a2 of AP2 as a distributed AP, the beacon packet may include radio frequency information of the radio frequency unit a1 of AP1 and radio frequency information of the radio frequency unit a2 of AP2.

When the present AP broadcasts a beacon packet to wireless terminals, the beacon packet may be a beacon packet, and the beacon packet includes a BSSID field, and the BSSID field is used to carry the radio frequency information of the present AP. On this basis, the beacon packet may further include a Multi Link (ML) field, where the ML field indicates that the beacon packet carries radio frequency information of a neighbor AP or does not carry radio frequency information of a neighbor AP. For example, if the value of the ML field is a first value (for example, 1), it indicates that the beacon packet carries radio frequency information of a neighbor AP. If the value of the ML field is a second value (for example, 0), it indicates that the beacon packet does not carry radio frequency information of a neighbor AP.

For example, if the present AP supports virtualizing radio frequency units of different APs as a distributed AP, that is, the AP supports a beacon packet to carry radio frequency information of a neighbor AP, when the present AP sends a beacon packet to the wireless terminals, the value of the ML field is the first value. Or, if the present AP does not support virtualizing radio frequency units of different APs as a distributed AP, that is, the present AP does not support a beacon packet to carry radio frequency information of a neighbor AP, when the present AP broadcasts a beacon packet to the wireless terminals, the value of the ML field is the second value.

If the ML field indicates that the beacon packet carries radio frequency information of a neighbor AP, the beacon packet may further include a Reduced Neighbor Report (RNR) field, and the RNR field may be used to carry the radio frequency information of the neighbor AP. If the ML field indicates that the beacon packet does not carry the radio frequency information of the neighbor AP, the beacon packet does not include the RNR field, that is, it does not carry the radio frequency information of the neighbor AP.

For example, when AP1 serves as the present AP, AP1 broadcasts a beacon packet, the value of the ML field of the beacon packet is the first value, and the RNR field includes radio frequency information of the radio frequency unit a2 of AP2.

In process 303, the wireless terminal receives a beacon packet broadcast by the present AP, where the beacon packet may include radio frequency information of the present AP, and the beacon packet may include radio frequency information of a neighbor AP of the present AP.

For example, if the wireless terminal is located within the coverage area of AP1, the wireless terminal may receive a beacon packet broadcast by AP1. The wireless terminal may also receive a beacon packet broadcast by AP2. When receiving beacon packets broadcast by a plurality of APs, the wireless terminal determines the signal strength of each beacon packet, and only processes the beacon packet with the maximum signal strength and discards other beacon packets. If the signal strength of a beacon packet broadcast by AP1 is the maximum, the wireless terminal performs subsequent processing (such as link establishment and data packet transmission) based on the beacon packet, the wireless terminal accesses AP1 and discards other beacon packets.

In process 304, the wireless terminal establishes a wireless link with the present AP based on the radio frequency information of the present AP, and the wireless terminal establishes a wireless link with the neighbor AP of the present AP based on the radio frequency information of the neighbor AP.

In an example, the wireless terminal obtains radio frequency information of the present AP from the beacon packet, and establishes a wireless link with the present AP based on the radio frequency information of the present AP. The wireless terminal obtains radio frequency information of the neighbor AP of the present AP from the beacon packet, and establishes a wireless link with the neighbor AP of the present AP based on the radio frequency information of the neighbor AP.

For example, AP1 broadcasts a beacon packet, the wireless terminal obtains radio frequency information of the radio frequency unit a1 of AP1 from the BSSID field of the beacon packet. If the wireless terminal supports the radio frequency unit a1, the wireless terminal establishes a wireless link with the AP1 based on the radio frequency information of the radio frequency unit a1 of the AP1, where the wireless link is a link for the radio frequency unit a1. Based on the wireless link, the wireless terminal may send data packets to AP1 through the radio frequency unit a1, and AP1 sends data packets to the wireless terminal through the radio frequency unit a1. For example, the wireless link may be a WIFI link or other types of links, which is not limited.

For example, the wireless terminal may also obtain the value of the ML field of the beacon packet. If the value of the ML field is the second value, the wireless terminal ends the procedure. If the value of the ML field is the first value, the wireless terminal may further obtain the content of the RNR field of the beacon packet, that is, obtain radio frequency information of the radio frequency unit a2 of AP2 from the RNR field. If the wireless terminal supports the radio frequency unit a2, the wireless terminal establishes a wireless link with AP2 based on the radio frequency information of the radio frequency unit a2 of AP2, where the wireless link is a link for the radio frequency unit a2. Based on the wireless link, the wireless terminal may send data packets to AP2 through the radio frequency unit a2, and AP2 may send data packets to the wireless terminal through the radio frequency unit a2. For example, the wireless link may be a WIFI link or other types of links, which is not limited.

In an example, the wireless terminal may support multiple radio frequency units, such as radio frequency unit A1, radio frequency unit A2, radio frequency unit a3, and radio frequency unit A4. Based on this, the wireless terminal establishes a wireless link with AP1 based on radio frequency information of the radio frequency unit A1 of the AP1. The wireless terminal establishes a wireless link with AP2 based on radio frequency information of the radio frequency unit A2 of the AP2. For example, the AC may know a plurality of radio frequency units supported by the wireless terminal, so that when the AC virtualizes the present AP and a neighbor AP as a distributed AP, the AC needs to virtualize the first radio frequency unit of the present AP (i.e., the radio frequency unit supported by both the present AP and the wireless terminal) and the second radio frequency unit of the neighbor AP (i.e., the radio frequency unit supported by both the neighbor AP and the wireless terminal) as a distributed AP.

The wireless terminal supporting a plurality of radio frequency units means that the wireless terminal allows the plurality of radio frequency units to concurrently receive data packets or send data packets, and the plurality of radio frequency units may be radio frequency units across single or multiple bands in 2.4GHz, 5GHz, and 6GHz, and the plurality of radio frequency units are not limited.

At this point, two wireless links are successfully established between the wireless terminal and the two APs. Since the wireless terminal establishes two wireless links, and the two wireless links correspond to a same MLD address (the radio frequency unit a1 of AP1 and the radio frequency unit a2 of AP2 are virtualized as one MLD address), the transmission stability of the wireless terminal is guaranteed.

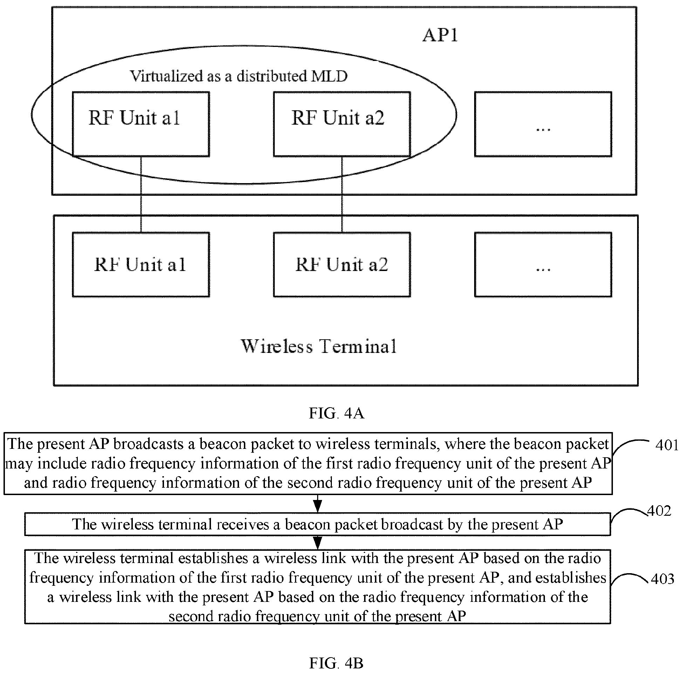

For a case of establishing two wireless links between a wireless terminal and a same AP, FIG. 4A is a schematic diagram of establishing a wireless link between a wireless terminal and a same AP. The AC virtualizes the radio frequency unit a1 of AP1 and the radio frequency unit a2 of the AP1 as a multi-link device (MLD), and the wireless terminal supports the radio frequency units a1 and a2. Based on the radio frequency information of the radio frequency unit a1 of AP1, the wireless terminal establishes a wireless link (denoted as link 1) with AP1 based on the radio frequency unit a1. Based on the radio frequency information of the radio frequency unit a2 of AP1, the wireless terminal establishes a wireless link (denoted as link 2) with the AP1 based on the radio frequency unit a2.

For example, a plurality of RF units may be virtualized as one MLD through a multi-link operation (MLO) function, and the MLD is composed of a plurality of accessory devices (i.e., radio frequency units) connected to an upper logical link control (LLC) layer, allowing concurrent transmission and reception of data in multiple channels across single or multiple bands in 2.4GHz, 5GHz, and 6GHz.

The MLO function adopts link aggregation at the Media Access Control (MAC) layer to map links to channels and bands. APs and wireless terminals may include dual band function or tri-band function. The MLO function allows packet-level link aggregation in the MAC layer across different physical layer (PHY) links. The MLO function may provide higher throughput, lower latency, and higher reliability.

The process of "establishing two wireless links between a wireless terminal and a same AP" is described in the following.

For each of the plurality of APs managed by the AC, the AP may be denoted as the present AP, the AC may virtualize a first radio frequency unit and a second radio frequency unit of the present AP as one MLD, and the first RF unit and the second RF unit are different. On the basis of virtualizing the first radio frequency unit and the second radio frequency unit as one MLD, the wireless terminal is provided with a joint service by the first radio frequency unit and the second radio frequency, that is, a plurality of radio frequency units of the present AP provide a wireless service for the wireless terminal. For example, when the AP1 serves as the present AP, assuming that AP1 supports the radio frequency unit a1, the radio frequency unit a2, the radio frequency unit a3, and the radio frequency unit a4, the radio frequency units a1 and a2 of AP1 may be virtualized as an MLD. Thus, the wireless service can be provided to the wireless terminal through the radio frequency unit a1 and the radio frequency unit a2 of the AP1.

In the above application scenario, referring to FIG. 4B, which is a schematic flowchart of establishing two wireless links between a wireless terminal and a same AP (two radio frequency units of the same AP), the procedure may include the following.

In process 401, the present AP broadcasts a beacon packet to wireless terminals, where the beacon packet may include radio frequency information of the first radio frequency unit of the present AP and radio frequency information of the second radio frequency unit of the present AP.

For example, when AP1 serves as the present AP, AP1 may broadcast a beacon packet, assuming that the AC virtualizes the radio frequency unit a1 of AP1 and the radio frequency unit a2 of AP1 as an MLD, the beacon packet may include radio frequency information of the radio frequency unit a1 of AP1 and radio frequency information of the radio frequency unit a2 of AP1. The radio frequency information of the radio frequency unit a1 of the AP1 may include, but is not limited to, channel information of the radio frequency unit a1 of AP1 and BSSID of AP1, where the BSSID may be understood as a unique identifier for identifying the AP1 in the WLAN, and the radio frequency information of the radio frequency unit a2 of AP1 may include, but is not limited to, channel information of the radio frequency unit a2 of AP1 and BSSID of AP1.

In process 402, the wireless terminal receives a beacon packet broadcast by the present AP, where the beacon packet may include radio frequency information of the first radio frequency unit of the present AP and radio frequency information of the second radio frequency unit of the present AP.

In process 403, the wireless terminal establishes a wireless link with the present AP based on the radio frequency information of the first radio frequency unit of the present AP, and establishes a wireless link with the present AP based on the radio frequency information of the second radio frequency unit of the present AP.

In an example, the wireless terminal obtains radio frequency information of the first radio frequency unit of the present AP from the beacon packet, and establishes a wireless link with the present AP based on the radio frequency information of the first radio frequency unit of the present AP.

The wireless terminal obtains radio frequency information of the second radio frequency unit of the present AP from the beacon packet, and establishes a wireless link with the present AP based on the radio frequency information of the second radio frequency unit of the present AP.

For example, AP1 broadcasts a beacon packet, the wireless terminal obtains radio frequency information of the radio frequency unit a1 of AP1 from the beacon packet. If the wireless terminal supports the radio frequency unit a1, the wireless terminal establishes a wireless link with AP1 based on the radio frequency information of the radio frequency unit a1 of the AP1, where the wireless link is a link for the radio frequency unit a1. Based on the wireless link, the wireless terminal may send data packets to AP1 through the radio frequency unit a1, and AP1 sends data packets to the wireless terminal through the radio frequency unit a1. For example, the wireless link may be a WIFI link or other types of links, which is not limited. For example, the wireless terminal may further obtain radio frequency information of the radio frequency unit a2 of AP1 from the beacon packet. If the wireless terminal supports the radio frequency unit a2, the wireless terminal establishes a wireless link with AP1 based on the radio frequency information of the radio frequency unit a2 of AP1, where the wireless link is a link for the radio frequency unit a2. Based on the wireless link, the wireless terminal may send data packets to AP1 through the radio frequency unit a2, and AP1 sends data packets to the wireless terminal through the radio frequency unit a2. For example, the wireless link may be a WIFI link or other types of links.

In an example, the wireless terminal may support multiple radio frequency units, such as radio frequency unit a1, radio frequency unit a2, radio frequency unit a3, and radio frequency unit A4, etc. Based on this, the wireless terminal establishes a wireless link with AP1 based on the radio frequency information of the radio frequency unit a1 of AP1. The wireless terminal establishes a wireless link with AP1 based on the radio frequency information of the radio frequency unit a2 of AP1. For example, the AC may know the plurality of radio frequency units supported by the wireless terminal. In this way, when the AC virtualizes the first radio frequency unit and the second radio frequency unit of the present AP as one MLD, the AC needs to take a radio frequency unit supported by both the present AP and the wireless terminal as the first radio frequency unit, and take another radio frequency unit supported by both the present AP and the wireless terminal as the second radio frequency unit.

At this point, two wireless links are successfully established between the wireless terminal and a same AP. Since the wireless terminal establishes two wireless links, and the two wireless links correspond to a same MLD address (the radio frequency unit a1 of AP1 and the radio frequency unit a2 of AP1 are virtualized as one MLD address), the transmission stability of the wireless terminal is guaranteed.

It can be seen from the above that the wireless terminal corresponds to at least two wireless links, and each wireless link is a wireless link between the wireless terminal and AP, for example, at least two wireless links between the wireless terminal and a same AP, or at least two radio links between a wireless terminal and a plurality of APs.

In an example, on the basis that the wireless terminal corresponds to at least two wireless links, the AC may obtain the load of each wireless link corresponding to the wireless terminal. For example, the AC periodically obtains the load of each wireless link corresponding to the wireless terminal, for example, the AC obtains the load of each wireless link corresponding to the wireless terminal every 1 second.

In order to obtain the load of each wireless link corresponding to the wireless terminal, the AP may actively send the load of the wireless link to the AC periodically, the AC may also send a load request message to the AP periodically, and after the AP receives the load request message each time, the AP sends the load of the wireless link to the AC.

For a case that the wireless terminal establishes two wireless links with two APs, the present AP sends the load of a wireless link to the AC, and the neighbor AP sends the load of the other wireless link to the AC. For a case that the wireless terminal establishes two wireless links with a same AP, the present AP sends the loads of the two wireless links to the AC.

For the load of a wireless link, it may be an air interface utilization rate of the wireless link, and the AP may calculate the load of the wireless link based on the parameters such as packet loss rate, latency, etc. corresponding to the wireless link, where the calculation method is not limited. It can be seen that the greater the load of the wireless link is, the more the data packets to be sent by the wireless link are, that is, the more the data packets are accumulated in the wireless link. On the contrary, the lower the load of the wireless link is, the fewer the data packets to be sent by the wireless link are, that is, the fewer the data packets are accumulated in the wireless link.

In an example, each time the AC obtains data packets to be sent to the wireless terminal, the AC triggers to query the load condition of the wireless link (that is, the load condition in the last period), and processes the data packets in different processing manners based on different load conditions. The processing manners under different load conditions are described in the following.

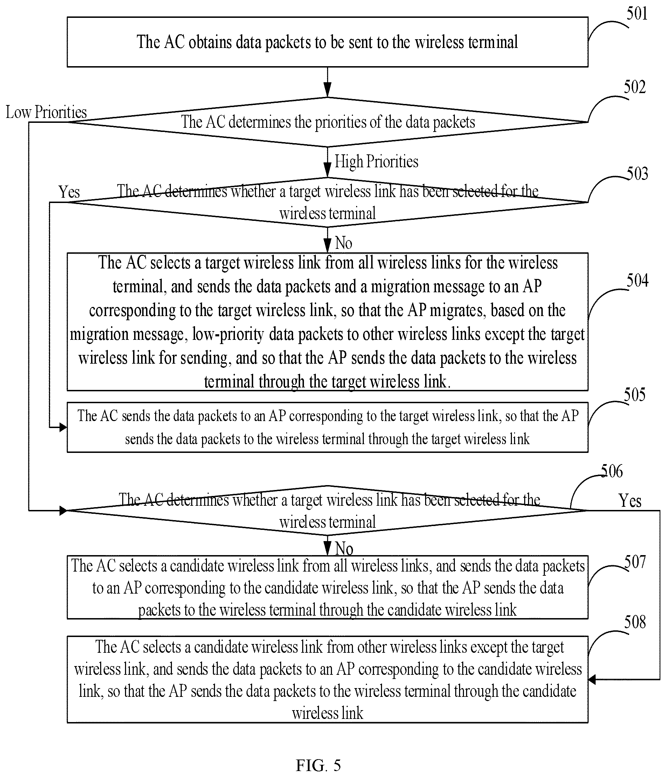

Case 1: The load condition is that the load of each wireless link is greater than a load threshold (which can be configured according to experience). In case 1, it is necessary to distinguish the priorities of data packets and adopt different processing manners for data packets of different priorities. For case 1, a packet transmission method is proposed in an example of the present disclosure, referring to FIG. 5, which is a schematic flowchart of the packet transmission method, the method may include the following.

In process 501, the AC obtains one or more data packets to be sent to the wireless terminal.

For example, when a device in the Internet sends one or more data packets to the wireless terminal, the AC may receive the data packets, and the data packets are data packets to be sent to the wireless terminal.

In process 502, the AC determines the priorities of the data packets, where the priorities of the data packets may be high priorities or low priorities. If the priorities of the data packets are high priorities, process 503 may be executed. If the priorities of the data packets are low priorities, process 506 may be executed.

In an example, the AC may pre-configure a mapping table, and the mapping table may include corresponding relationships between data features and priorities, as shown in Table 1, which is an example of the mapping table.

**Table 1**

| Data Feature | Priority |
|---|---|
| Data feature A1 | High priority |
| Data feature A2 | High priority |
| Data feature A3 | Low priority |
| ... | ... |

For the data feature, the data feature may include, but is not limited to, five-tuple information (the five-tuple information may also be replaced by three-tuple information, or a source IP address and a destination IP address, or a destination IP address) and/or a data type. For example, the five-tuple information may include a source IP address, a source port, a destination IP address, a destination port, and a transport layer protocol. For example, the data type can also be called a traffic type, such as a network traffic type, a website traffic type, an application traffic type, a video traffic type (such as audio conference traffic or video conference traffic), an SMS traffic type and a data center traffic type, etc.

For each data feature, a high priority or a low priority may be configured for the data feature, for example, the user configures a high priority or a low priority for the data feature according to his own needs.

In an example, the AC, after obtaining one or more data packets, obtains data features from the data packets. For example, the data packets may include five-tuple information, and the five-tuple information may be obtained from the data packets. For example, a Type of service (ToS) field or a Differentiated Services Codepoint (DSCP) of a data packet may carry a data type, and the data type may be obtained from the data packet. After obtaining the data features, the AC queries the mapping table shown in Table 1 based on the data features to obtain the priorities of the data packets, where the priorities may be high priorities or low priorities.

In process 503, if the load of each wireless link is greater than a load threshold and the data packets are high-priority data packets, the AC determines whether a target wireless link has been selected for the wireless terminal, where the target wireless link is a wireless link only used to transmit high-priority data packets and does not transmit low-priority data packets.

If not, it indicates that the target wireless link has not been selected, and process 504 may be executed.

If yes, it indicates that the target wireless link has been selected, and process 505 may be executed.

In an example, a flag bit may be pre-configured, and when the value of the flag bit is a first value (for example, 1), it indicates that a target wireless link has been selected for the wireless terminal, and when the value of the flag bit is a second value (for example, 0), it indicates that no target wireless link has been selected for the wireless terminal, and the initial value of the flag bit is the second value.

On this basis, in process 503, the AC may query the value of the flag bit. If the value of the flag bit is the first value, the AC determines that a target wireless link has been selected for the wireless terminal. If the value of the flag bit is the second value, the AC determines that no target wireless link has been selected for the wireless terminal.

For the maintenance procedure of the value of the flag bit, when a target wireless link is selected for the wireless terminal from all wireless links, the AC modifies the value of the flag bit to a first value. When the load condition is switched from that the load of each wireless link is greater than a load threshold to that the load of at least one wireless link is not greater than the load threshold, the AC modifies the value of the flag bit to a second value, that is, cancels the target wireless link selected for the wireless terminal.

In process 504, the AC selects a target wireless link from all wireless links for the wireless terminal, and sends the one or more data packets and a migration message to an AP corresponding to the target wireless link, so that the AP migrates, based on the migration message, low-priority data packets to other wireless links except the target wireless link for sending, and so that the AP sends the one or more data packets to the wireless terminal through the target wireless link.

The AC may randomly select a wireless link from all wireless links as the target wireless link, or select a wireless link as the target wireless link by adopting certain algorithm. After selecting the target wireless link, the AC modifies the value of the flag bit to the first value, and records the target wireless link for the wireless terminal. In this way, when high-priority data packets are obtained again, in process 503, it is known that the target wireless link has been selected for the wireless terminal, and it may be known which wireless link is the target wireless link.

The AC may send a migration message to an AP corresponding to the target wireless link, and the AP migrates, based on the migration message, low-priority data packets to other wireless links except the target wireless link for sending.

For example, referring to FIG. 3A, assuming that the target wireless link is wireless link 1 between AP1 and the wireless terminal, and it is necessary to migrate the low-priority data packets to wireless link 2 between AP2 and the wireless terminal, in this way, the AC sends a migration message to AP1, where the migration message includes information of wireless link 1 and information of AP2. After receiving the migration message, based on the information of the wireless link 1, the AP1 obtains a low-priority data packet that needs to be sent through the wireless link 1, that is, the low-priority data packet that is queued and waiting in the wireless link 1. Based on the information of AP2, AP1 sends these low-priority data packets to AP2, and AP2 may send these data packets through the wireless link 2 after receiving these data packets.

As for how to distinguish between high-priority data packets and low-priority data packets, when the AC sends a data packet to AP1, the AC may add a priority field in the data packet, and the priority field indicates whether the data packet is of high priority or low priority. Based on the priority field, AP1 may obtain a low-priority data packet that needs to be sent through the wireless link 1, and then send the low-priority data packet to AP2.

For example, referring to FIG. 4A, assuming that the target wireless link is wireless link 1 between radio frequency unit a1 of AP1 and radio frequency unit a1 of the wireless terminal, it is necessary to migrate low-priority data packets to wireless link 2 between radio-frequency unit a2 of AP1 and radio-frequency unit a2 of the wireless terminal, in this way, the AC sends a migration message to AP1, where the migration message includes information of wireless link 1 and information of wireless link 2.

After receiving the migration message, AP1 obtains a low-priority data packet that needs to be sent through the wireless link 1 based on the information of the wireless link 1. Based on the information of the wireless link 2, the AP1 migrates the low-priority data packet to the wireless link 2, and sends the low-priority data packet through the wireless link 2.

The AC may send one or more data packets to an AP corresponding to the target wireless link, so that the AP sends the data packets to the wireless terminal through the target wireless link.

For example, referring to FIG. 3A, assuming that the target wireless link is wireless link 1 between AP1 and the wireless terminal, the AC sends data packets to AP1. Since the AP1 only establishes one wireless link 1 with the wireless terminal, the AP1 sends the data packets to the wireless terminal through the wireless link 1.

For example, referring to FIG. 4A, assuming that the target wireless link is wireless link 1 between a radio frequency unit a1 of AP1 and a radio frequency unit a1 of the wireless terminal, the AC sends data packets to AP1. Since AP1 establishes wireless link 1 and wireless link 2 with the wireless terminal, the AC may further send a control message to AP1, where the control message is used to instruct AP1 to send the data packets to the wireless terminal through wireless link 1. Based on this, AP1 sends the data packets to the wireless terminal through the wireless link 1 based on the control message.

In process 505, the AC sends data packets to an AP corresponding to the target wireless link, so that the AP sends the data packets to the wireless terminal through the target wireless link.

For example, referring to FIG. 3A, assuming that the target wireless link is wireless link 1 between AP1 and the wireless terminal, the AC may send data packets to AP1. AP1 may send the data packets to the wireless terminal through the wireless link 1. For example, referring to FIG. 4A, assuming that the target wireless link is wireless link 1 between the radio frequency unit a1 of AP1 and the radio frequency unit a1 of the wireless terminal, the AC may send data packets to AP1. AP1 may send data packets to the wireless terminal through the wireless link 1.

Accordingly, referring to processes 503 to 505, with respect to high-priority data packets (for example, a data packet of audio-video conference traffic), if the load of each wireless link is greater than a load threshold, the AC migrates the low-priority data packets in the target wireless link to other wireless links, so as to ensure that there is a certain amount of idleness in the target wireless link. The high-priority data packets are sent through the target wireless link, so that the high-priority data packets can be preferentially sent through the target wireless link, and the latency of the high-priority data packets is guaranteed. Since the wireless terminal can keep the connection stability of the target wireless link and other wireless links, during the load scheduling procedure, the wireless terminal will not sense service interruption or WIFI reconnection.

In process 506, if the load of each wireless link is greater than the load threshold and the data packets are low-priority data packets, the AC determines whether a target wireless link has been selected for the wireless terminal.

If not, it indicates that the target wireless link has not been selected, and process 507 may be executed.

If yes, it indicates that the target wireless link has been selected, and process 508 may be executed.

In process 507, the AC selects a candidate wireless link from all wireless links, and sends the data packets to an AP corresponding to the candidate wireless link, so that the AP sends the data packets to the wireless terminal through the candidate wireless link.

For example, the AC may randomly select a wireless link from all wireless links as a candidate wireless link, or select a wireless link as a candidate wireless link by adopting certain algorithm. The candidate wireless link is a wireless link used to send data packets to the wireless terminal, and the selection manner is not limited.

The AC may send data packets to an AP corresponding to the candidate wireless link, so that the AP sends the data packets to the wireless terminal through the candidate wireless link. For example, referring to FIG. 3A, assuming that the candidate wireless link is wireless link 2 between AP2 and the wireless terminal, the AC sends data packets to AP2, and AP2 sends the data packets to the wireless terminal through wireless link 2. Referring to FIG. 4A, assuming that the candidate wireless link is wireless link 2 between the radio frequency unit a2 of AP1 and the radio frequency unit a2 of the wireless terminal, the AC sends data packets to AP1. The AC may further send a control message to AP1, where the control message is used to instruct AP1 to send the data packets to the wireless terminal through the wireless link 2. Based on this, after receiving the data packets and the control message, the AP1 sends the data packets to the wireless terminal through the wireless link 2 based on the control message.

In process 508, the AC selects a candidate wireless link from other wireless links except the target wireless link (that is, the candidate wireless link and the target wireless link cannot be repeated), and sends the data packets to an AP corresponding to the candidate wireless link, so that the AP sends the data packets to the wireless terminal through the candidate wireless link.

For example, on the basis of the target wireless link being excluded, the AC may randomly select a wireless link from the remaining wireless links as a candidate wireless link, or may adopt certain algorithm to select a wireless link from the remaining wireless links as a candidate wireless link. Then, the AC may send data packets to an AP corresponding to the candidate wireless link, so that the AP sends the data packets to the wireless terminal through the candidate wireless link.

Accordingly, referring to processes 506 to 508, with respect to low-priority data packets, if the load of each wireless link is greater than the load threshold, the AC allocates the low-priority data packets to other wireless links except the target wireless link to avoid occupying resources of the target wireless link, so that high-priority data packets can be preferentially sent through the target wireless link, and the latency of the high-priority data packets is guaranteed.

Case 2: The load condition is that the load of a wireless link is not greater than the load threshold. In case 2, there is no need to distinguish the priorities of data packets, and data packets of all priorities are processed in the same processing manner. For case 2, a packet transmission method is proposed in an example of the present disclosure, and the method may include the following.

The AC obtains one or more data packets to be sent to the wireless terminal. If the load of only one wireless link in all wireless links is not greater than a load threshold, the AC selects the wireless link as a candidate wireless link, that is, the wireless link whose load is not greater than the load threshold is selected as the candidate wireless link. The AC sends the data packets to an AP corresponding to the candidate wireless link, so that the AP sends the data packets to the wireless terminal through the candidate wireless link.

Accordingly, regardless of the high-priority data packet or the low-priority data packet, if the load of a wireless link is relatively low, the data packet is sent to the wireless terminal through the wireless link with a relatively low load, so as to reduce the impact on other services while ensuring the normal transmission of its own traffic.

Case 3: The load condition is that the load of each of K wireless links is not greater than the load threshold. In this case 3, there is no need to distinguish the priorities of the data packets, data packets of all priorities are processed in the same processing manner. For case 3, a packet transmission method is proposed in an example of the present disclosure, and the method may include the following.

The AC obtains data packets to be sent to the wireless terminal. If the load of each of only K (at least two) wireless links among all wireless links is not greater than the load threshold, where K may be a positive integer greater than 1, the AC may select all the K wireless links as candidate wireless links. In addition, the AC may also divide the data packets into K sub-data packets, and send the K sub-data packets to the APs corresponding to the K candidate wireless links respectively, so that the corresponding APs send the sub-data packets received by themselves to the wireless terminal.

For example, referring to FIG. 3A, assuming that the load of each of wireless link 1 and wireless link 2 is not greater than the load threshold, the AC takes both wireless link 1 and wireless link 2 as candidate wireless links, and divides all data packets into two sub-data packets. Considering that data packets belong to a continuous traffic which includes a large number of data packets, two sub-data packets can be obtained by grouping, the first data packet is classified into the first sub-data packet, the second data packet is classified into the second sub-data packet, the third data packet is classified into the first sub-data packet, the fourth data packet is classified into the second sub-data packet, and so on, two sub-data packets may be obtained. Then, the AC sends the first sub-data packet to AP1, and AP1 sends the first sub-data packet to the wireless terminal through the wireless link 1, and the AC sends the second sub-data packet to AP2, and AP2 sends the second sub-data packet to the wireless terminal through the wireless link 2.

As shown in FIG. 4A, assuming that wireless link 1 and wireless link 2 are candidate wireless links, the AC sends the first sub-data packet and the second sub-data packet to AP1, the AP1 sends the first sub-data packet to the wireless terminal through wireless link 1 and sends the second sub-data packet to the wireless terminal through wireless link 2.

Accordingly, regardless of a high-priority data packet or a low-priority data packet, if the load of each of K wireless links is relatively low, data packets may be sent to the wireless terminal through the K wireless links in an accelerated manner, thereby improving user experience and reducing the occupation of wireless links by data packets.

In an example, on the basis that the wireless terminal corresponds to at least two wireless links, the wireless terminal may obtain the load of each wireless link. For example, the wireless terminal periodically obtains the load of each wireless link, for example, obtains the load of each wireless link every 1 second. The load of the wireless link may be an air interface utilization rate of the wireless link, and the wireless terminal may calculate the load based on parameters such as a packet loss rate and a latency corresponding to the wireless link.

In an example, each time the wireless terminal obtains a data packet to be sent to the wireless terminal, the wireless terminal triggers to query the load condition of the wireless link (that is, the load condition in the last period), and processes the data packet in different processing manners based on different load conditions. The processing manners under different load conditions are described in the following.

Case 1: The load condition is that the load of each wireless link is greater than the load threshold. In case 1, it is necessary to distinguish the priorities of data packets and adopt different processing manners for data packets of different priorities.

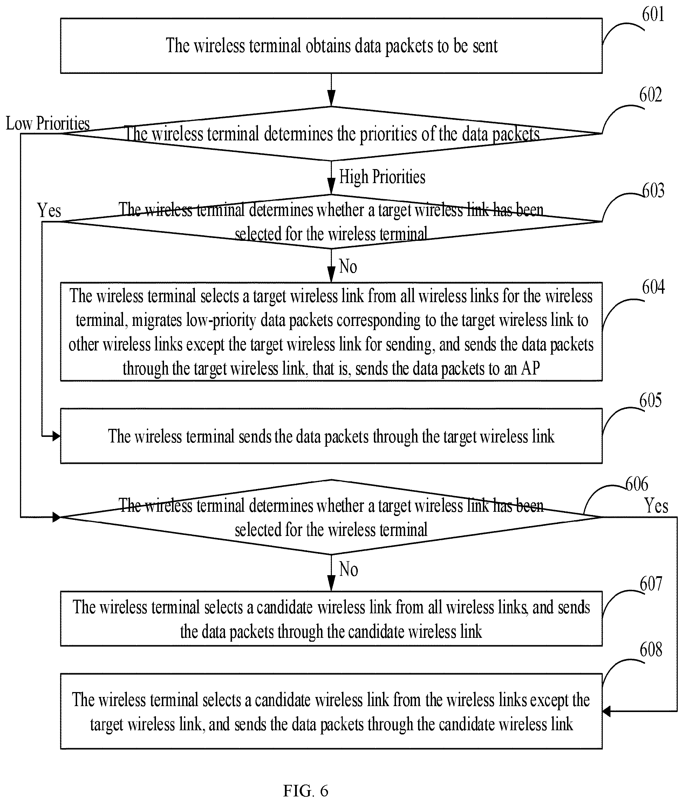

For case 1, a packet transmission method is proposed in an example of the present disclosure, referring to FIG. 6, which is a schematic flowchart of the packet transmission method, the packet transmission method may include the following.

In process 601, the wireless terminal obtains one or more data packets to be sent.

For example, when the wireless terminal sends data packets to a device in the Internet, the wireless terminal may obtain the data packets, and the data packets are data packets to be sent by the wireless terminal.

In process 602, the wireless terminal determines the priorities of the data packets, where the priorities of the data packets may be high priorities or low priorities. If the priorities of the data packets are high priorities, process 603 may be executed. If the priorities of the data packets are low priorities, process 606 may be executed.

In process 603, if the load of each wireless link is greater than the load threshold and the data packets are high-priority data packets, the wireless terminal determines whether a target wireless link has been selected for the wireless terminal, and the target wireless link may be a wireless link only used for transmitting high-priority data packets and not used for transmitting low-priority data packets. If not, it indicates that the target wireless link has not been selected, and process 604 may be executed. If yes, it indicates that the target wireless link has been selected, and process 605 may be executed.

In process 604, the wireless terminal selects a target wireless link from all wireless links for the wireless terminal, migrates low-priority data packets corresponding to the target wireless link to other wireless links except the target wireless link for sending, and sends the data packets through the target wireless link, that is, sends the data packets to an AP.

In process 605, the wireless terminal sends the one or more data packets through the target wireless link.

In process 606, if the load of each wireless link is greater than the load threshold and the data packets are low-priority data packets, the wireless terminal determines whether a target wireless link has been selected for the wireless terminal.

If not, it indicates that the target wireless link has not been selected, and process 607 may be executed.

If yes, it indicates that the target wireless link has been selected, and process 608 may be executed.

In process 607, the wireless terminal selects a candidate wireless link from all wireless links, and sends the data packets through the candidate wireless link, that is, the wireless terminal sends the data packets to an AP.

In process 608, the wireless terminal selects a candidate wireless link from the wireless links except the target wireless link, and sends the data packets through the candidate wireless link, that is, the wireless terminal sends the data packets to the AP.

In an example, after the wireless terminal sends the data packets to the AP, the AP receives the data packets through the wireless link and sends the data packets to the AC, and the AC sends the data packets to the Internet.

In an example, processes 601 to 608 may refer to processes 501 to 508, only the executing subject is changed from the AC to the wireless terminal, and processes 601 to 608 are not described in detail.

Case 2: The load condition is that the load of a wireless link is not greater than the load threshold. In case 2, there is no need to distinguish the priorities of data packets, and data packets of all priorities are processed in a same processing manner. For case 2, the wireless terminal obtains data packets to be sent by the wireless terminal. If the load of only one wireless link in all wireless links is not greater than the load threshold, the wireless terminal selects the wireless link as a candidate wireless link and sends the data packets through the candidate wireless link, that is, sends the data packets to the AP through the candidate wireless link.

Case 3: The load condition is that the load of each of the K wireless links is not greater than the load threshold. In case 3, there is no need to distinguish the priorities of the data packets, and data packets of all priorities are processed in a same processing manner. For case 3, the wireless terminal obtains data packets to be sent by the wireless terminal. If the load of each of K wireless links in all wireless links is not greater than the load threshold, and K may be a positive integer greater than 1, the wireless terminal may select all the K wireless links as candidate wireless links. In addition, the wireless terminal may further divide the data packets into K sub-data packets and send the K sub-data packets through the K candidate wireless links.

As can be seen from the above technical solutions, in the examples of the present disclosure, when the number of Multiple-In Multiple-Out (MIMO) of the wireless terminal is larger, more wireless links may be established between the wireless terminal and the APs, and the larger the load scheduling range is, the higher the flexibility is. In the process of load scheduling, the AC actively performs algorithm scheduling according to the traffic conditions, and selects the wireless link for transmission, so there is no need to worry about the problems such as service interruption caused by the wireless terminal not accepting the scheduling or the WIFI disconnection of the wireless terminal. In the process of ensuring high-priority services, the capacity of the wireless link can be flexibly adjusted since the wireless terminal does not drop the line, so that the high-priority services are always kept forwarded preferentially, the high-priority services are reliably ensured, and the service experience is improved.

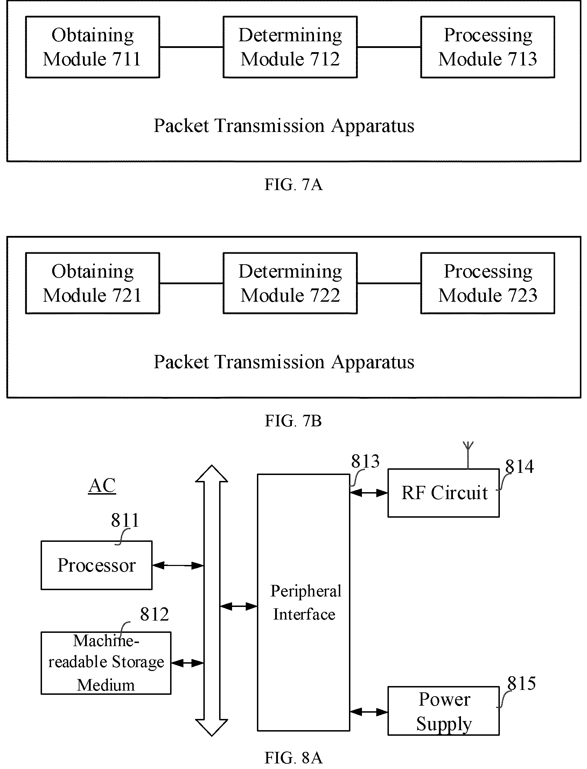

Based on the same application concept as the above method, an example of the present disclosure proposes a packet transmission apparatus, which is applied to an AC. Referring to FIG. 7A, which is a schematic structural diagram of the apparatus, the apparatus includes:
an obtaining module 711, configured to obtain one or more data packets to be sent to a wireless terminal, where the wireless terminal corresponds to at least two wireless links;
a determining module 712, configured to, in response to that a load of each wireless link is greater than a load threshold, and the data packets are high-priority data packets, determine whether a target wireless link has been selected for the wireless terminal;
a processing module 713, configured to, in response to that the target wireless link has not been selected, select a target wireless link from all wireless links corresponding to the wireless terminal, and send the data packets and a migration message to an AP corresponding to the target wireless link, so that the AP migrates, based on the migration message low-priority data packets to other wireless links except the target wireless link for sending, and sends the data packets to the wireless terminal through the target wireless link; in response to that a target wireless link has been selected, send the data packets to an AP corresponding to the target wireless link, so that the AP sends the data packets to the wireless terminal through the target wireless link.

The determining module 712 is further configured to, in response to that the load of each wireless link is greater than the load threshold and the data packets are low-priority data packets, determine whether the target wireless link has been selected for the wireless terminal, and the processing module 713 is further configured to, in response to that the target wireless link has not been selected for the wireless terminal, select a candidate wireless link from all wireless links; in response to that the target wireless link has been selected for the wireless terminal, select a candidate wireless link from other wireless links except the target wireless link; send the data packets to an AP corresponding to the candidate wireless link, so that the AP sends the data packets to the wireless terminal through the candidate wireless link.

The processing module 713 is further configured to select, if a load of only one wireless link in all wireless links is not greater than the load threshold, select the wireless link as a candidate wireless link, and send the data packets to an AP corresponding to the candidate wireless link, so that the AP sends the data packets to the wireless terminal through the candidate wireless link.

The processing module 713 is further configured to, in response to that a load of each of K wireless links in all wireless links is not greater than the load threshold, where K is a positive integer greater than 1, select the K wireless links as candidate wireless links; divide the data packets into K sub-data packets, and respectively send the K sub-data packets to APs corresponding to the K candidate wireless links, so that the APs send the corresponding sub-data packets received by the APs to the wireless terminal.

The determination module 712 is further configured to, after obtaining the data packets to be sent to the wireless terminal, obtain priorities of the data packets by querying a configured mapping table based on data features of the data packets, where the priorities are high priorities or low priorities, the mapping table includes a corresponding relationship between a data feature and a priority, and the data feature includes five-tuple information and/or a data type.

In an example, for the at least two wireless links corresponding to the wireless terminal, different wireless links are wireless links between the wireless terminal and a same AP, or the different wireless links are wireless links between the wireless terminal and different APs.

Based on the same application concept as the above method, an example of the present disclosure proposes a packet transmission apparatus, which is applied to a wireless terminal. Referring to FIG. 7B, which is a schematic structural diagram of the apparatus, the apparatus includes:
an obtaining module 721, configured to obtain data packets to be sent by the wireless terminal, where the wireless terminal corresponds to at least two wireless links;
a determining module 722, configured to, if the load of each wireless link is greater than a threshold and the data packets are high-priority data packets, determine whether a target wireless link has been selected for the wireless terminal;
a processing module 723, configured to, if no target wireless link has been selected, select a target wireless link from all wireless links corresponding to the wireless terminal, migrate low-priority data packets corresponding to the target wireless link to wireless links except the target wireless link for sending, and send the data packets through the target wireless link; if the target wireless link has been selected, send the data packets through the target wireless link.

The determining module 722 is further configured to, if the load of each wireless link is greater than the load threshold and the data packets are low-priority data packets, determine whether a target wireless link has been selected for the wireless terminal; and the processing module 713 is further configured to, if no target wireless link has been selected, select a candidate wireless link from all wireless links; if the target wireless link is selected, select a candidate wireless link from other wireless links except the target wireless link, and send the data packets through the candidate wireless link.

The processing module 713 is further configured to, if the load of only one wireless link in all wireless links is not greater than the load threshold, select the wireless link as a candidate wireless link, and send the data packets through the candidate wireless link.

The processing module 713 is further configured to, if the load of each of K wireless links in all wireless links is not greater than the load threshold, where K is a positive integer greater than 1, select the K wireless links as candidate wireless links; divide the data packets into K sub-data packets, and respectively sends the K sub-data packets to APs corresponding to the K candidate wireless links, so that the corresponding APs send the sub-data packets received by themselves to the wireless terminal.

The determining module 722 is further configured to, after obtaining the data packets to be sent by the wireless terminal, query a configured mapping table based on data features of the data packets to obtain the priorities of the data packets, where the priorities are high priorities or low priorities, and the mapping table includes a corresponding relationship between a data feature and a priority, and the data feature includes five-tuple information and/or a data type.

In an example, the at least two wireless links corresponding to the wireless terminal, different wireless links are wireless links between the wireless terminal and a same AP, or the different wireless links are wireless links between the wireless terminal and different APs.

Based on the same application concept as the above method, an example of the present disclosure proposes an electronic device (such as an AC, an AP, or a wireless terminal), which may include a processor and a machine-readable storage medium, where the machine-readable storage medium stores machine-executable instructions that can be executed by the processor; the processor is configured to execute the machine-executable instructions to perform the packet transmission methods of the examples of the present disclosure.

Based on the same concept as the above method, an AC is proposed in an example of the present disclosure. As shown in FIG. 8A, the AC may include a processor 811 and a machine-readable storage medium 812, where the machine-readable storage medium 812 stores machine-executable instructions that can be executed by the processor 811; the processor 811 is configured to execute machine-executable instructions to perform the packet transmission methods disclosed in the above examples of the present disclosure.

In an example, processor 811 may include one or more processing cores, such as a 4-core processor, an 8-core processor, or the like. The processor 811 may be implemented by adopting a hardware form of at least one of, a Digital Signal Processing (DSP), a Field-Programmable Gate Array (FPGA) and a Programmable Logic Array (PLA).

The processor 811 may also include a main processor and a coprocessor. The main processor is a processor for processing data in an awake state, and is also referred to as a Central Processing Unit (CPU). The coprocessor is a low-power processor for processing data in a standby state.

In some examples, the processor 811 may be integrated with a Graphics Processing Unit (GPU), and the GPU is used for rendering and drawing contents required to be displayed on a display screen.

In an example, the AC may further include a peripheral interface 813 and at least one peripheral. The processor 811 and the peripheral interface 813 may be connected via a bus or signal line. Each peripheral may be connected to the peripheral interface 813 via a bus, a signal line, or a circuit board. For example, the peripheral may include at least one of radio frequency circuit 814 and power supply 815.

The radio frequency circuit 814 is configured to receive and send radio frequency (RF) signals, which are also referred to as electromagnetic signals. Radio frequency circuit 814 communicates with the communication network and other communication devices via electromagnetic signals. The RF circuit 814 converts electrical signals to electromagnetic signals for sending, or converts received electromagnetic signals to electrical signals. In some examples, the RF circuit 814 includes an antenna system, an RF transceiver, one or more amplifiers, a tuner, an oscillator, a digital signal processor, a subscriber identity module card, and the like.

RF circuit 814 may communicate with user devices via at least one wireless communication protocol. The wireless communication protocol includes, but is not limited to, the World Wide Web, metropolitan area networks, intranets, various generations of mobile communication networks (2G, 3G, 4G and 5G), wireless local area networks and/or Wireless Fidelity (WiFi) networks.

The power supply 815 is used to supply power to various components in the electronic device. The power supply 815 may be an alternating current power supply, a direct current power supply, a disposable battery, or a rechargeable battery, and the type of the power supply 815 is not limited.

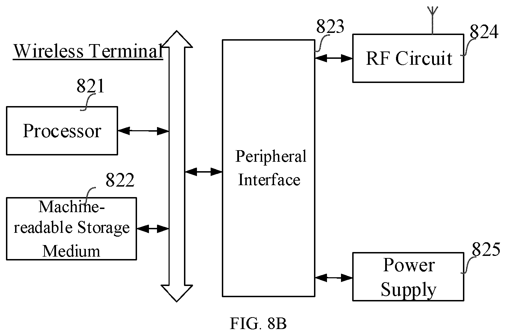

Based on the same concept as the above method, a wireless terminal is proposed in an example of the present disclosure. As shown in FIG. 8B, the wireless terminal may include a processor 821 and a machine-readable storage medium 822, where the machine-readable storage medium 822 stores machine-executable instructions that can be executed by the processor 821; the processor 821 is configured to execute the machine-executable instructions to perform the packet transmission methods disclosed in the foregoing examples of the present disclosure.

The processor 821 may include one or more processing cores, such as a 4-core processor, an 8-core processor, or the like. The processor 811 may be implemented by adopting a hardware form of at least one of, a DSP, an FPGA and a PLA.

The processor 821 may also include a main processor and a coprocessor. The main processor is a processor for processing data in an awake state, and is also referred to as a CPU. The coprocessor is a low-power processor for processing data in a standby state. In some examples, the processor 821 may be integrated with a GPU, and the GPU is used for rendering and drawing contents required to be displayed on a display screen.

In an example, the wireless terminal may further include a peripheral interface 823 and at least one peripheral. The processor 821 and the peripheral interface 823 may be connected via a bus or signal line. Each peripheral may be connected to the peripheral interface 823 via a bus, a signal line, or a circuit board. For example, the peripheral may include at least one of radio frequency circuit 824 and power supply 825.

Radio frequency circuit 824 is used to receive and send RF signals, which are also referred to as electromagnetic signals. Radio frequency circuit 824 communicates with the communication network and other communication devices via electromagnetic signals. The RF circuit 824 converts electrical signals to electromagnetic signals for sending, or converts received electromagnetic signals to electrical signals. In some examples, the RF circuit 824 includes an antenna system, an RF transceiver, one or more amplifiers, a tuner, an oscillator, a digital signal processor, a subscriber identity module card, and the like. RF circuit 824 may communicate with user devices via at least one wireless communication protocol. The wireless communication protocol includes, but is not limited to, the World Wide Web, metropolitan area networks, intranets, various generations of mobile communication networks, wireless local area networks, and/or WiFi networks.

The power supply 825 is used to supply power to various components in the electronic device. The power supply 825 may be an alternating current power supply, a direct current power supply, a disposable battery, or a rechargeable battery, and the type of the power supply 825 is not limited.

Based on the same application concept as the above method, the examples of the present disclosure further provide a machine-readable storage medium, on which a plurality of computer instructions are stored, and when the computer instructions are executed by a processor, the packet transmission method disclosed in the above example of the present disclosure may be performed. The aforementioned machine-readable storage medium may be any electronic, magnetic, optical, or other physical storage devices that may contain or store information such as executable instructions, data, etc. A machine-readable storage medium may be, for example, an RAM, a volatile memory, a non-volatile memory, a flash memory, a storage drive (such as a hard drive), a solid state disk, any type of storage disk (such as an optical disk, DVD, etc.), or a similar storage medium, or a combination thereof.

Based on the same application concept as the above method, the examples of the present disclosure further provide a computer program product, which may include a computer program, where when the computer program is executed by a processor, the packet transmission method disclosed in the above example of the present disclosure can be performed.

Those skilled in the art should understand that, examples of the present disclosure may be provided as methods, systems, or computer program products. Accordingly, the present disclosure may take the form of an entirely hardware example, an entirely software example, or an example combining software and hardware aspects. Furthermore, the example of the present disclosure may take the form of a computer program product embodied on one or more computer-usable storage medium having computer-usable program code (including, but not limit to, a magnetic disk storage, a CD-ROM, an optical storage, etc.).

The above description are only examples of the present disclosure and are not intended to limit the present disclosure. For those skilled in the art, various modifications and variations are possible in the present disclosure. Any modifications, equivalent replacements, improvements, etc., which are within the spirit and principles of the present disclosure are intended to be included within the scope of the claims of the present disclosure.

## Claims

1. A packet transmission method, wherein the method is applied to an access controller, AC, and comprises:
obtaining one or more data packets to be sent to a wireless terminal, wherein the wireless terminal corresponds to at least two wireless links;
in response to that a load of each wireless link is greater than a load threshold, and the data packets are high-priority data packets, determining whether a target wireless link has been selected for the wireless terminal;
if not, selecting a target wireless link from all wireless links corresponding to the wireless terminal, and sending the data packets and a migration message to an AP corresponding to the target wireless link, so that the AP migrates, based on the migration message, low-priority data packets to other wireless links except the target wireless link for sending, and sends the data packets to the wireless terminal through the target wireless link;
if yes, sending the data packets to an AP corresponding to the target wireless link, so that the AP sends the data packets to the wireless terminal through the target wireless link.

2. The method according to claim 1, wherein
after obtaining the data packets to be sent to the wireless terminal, the method further comprises:
in response to that the load of each wireless link is greater than the load threshold and the data packets are low-priority data packets, determining whether the target wireless link has been selected for the wireless terminal;
if not, selecting a candidate wireless link from all wireless links; if yes, selecting a candidate wireless link from other wireless links except the target wireless link;
sending the data packets to an AP corresponding to the candidate wireless link, so that the AP sends the data packets to the wireless terminal through the candidate wireless link.

3. The method according to claim 1, wherein
after obtaining the data packets to be sent to the wireless terminal, the method further comprises:
in response to that a load of only one wireless link in all wireless links is not greater than the load threshold, selecting the wireless link as a candidate wireless link, and sending the data packets to an AP corresponding to the candidate wireless link, so that the AP sends the data packets to the wireless terminal through the candidate wireless link.

4. The method according to claim 1, wherein
after obtaining the data packets to be sent to the wireless terminal, the method further comprises:
in response to that a load of each of K wireless links in all wireless links is not greater than the load threshold, wherein K is a positive integer greater than 1, selecting the K wireless links as candidate wireless links; dividing the data packets into K sub-data packets, and respectively sending the K sub-data packets to APs corresponding to the K candidate wireless links, so that the APs send the corresponding sub-data packets received by the APs to the wireless terminal.

5. The method according to claim 1 or 2, wherein
after obtaining the data packets to be sent to the wireless terminal, the method further comprises:
obtaining priorities of the data packets by querying a configured mapping table based on data features of the data packets, wherein the priorities are high priorities or low priorities, the mapping table comprises a corresponding relationship between a data feature and a priority, and the data feature comprises five-tuple information and/or a data type.

6. The method according to any one of claims 1 to 4, wherein for the at least two wireless links corresponding to the wireless terminal, different wireless links are wireless links between the wireless terminal and a same AP, or the different wireless links are wireless links between the wireless terminal and different APs.

7. A packet transmission apparatus, wherein the apparatus is applied to an access controller, AC, and comprises:
an obtaining module, which is to obtain one or more data packets to be sent to a wireless terminal, wherein the wireless terminal corresponds to at least two wireless links;
a determining module, which is to, in response to that a load of each wireless link is greater than a load threshold, and the data packets are high-priority data packets, determine whether a target wireless link has been selected for the wireless terminal;
a processing module, which is to, in response to that the target wireless link has not been selected, select a target wireless link from all wireless links corresponding to the wireless terminal, and send the data packets and a migration message to an AP corresponding to the target wireless link, so that the AP migrates, based on the migration message, low-priority data packets to other wireless links except the target wireless link for sending, and sends the data packets to the wireless terminal through the target wireless link;
in response to that a target wireless link has been selected, send the data packets to an AP corresponding to the target wireless link, so that the AP sends the data packets to the wireless terminal through the target wireless link.

8. The apparatus according to claim 7, wherein
the determining module is further to, in response to that the load of each wireless link is greater than the load threshold and the data packets are low-priority data packets, determine whether the target wireless link has been selected for the wireless terminal;
the processing module is further to, in response to that the target wireless link has not been selected for the wireless terminal, select a candidate wireless link from all wireless links; in response to that the target wireless link has been selected for the wireless terminal, select a candidate wireless link from other wireless links except the target wireless link; send the data packets to an AP corresponding to the candidate wireless link, so that the AP sends the data packets to the wireless terminal through the candidate wireless link.

9. The apparatus according to claim 7, wherein
the processing module is further to, in response to that a load of only one wireless link in all wireless links is not greater than the load threshold, select the wireless link as a candidate wireless link, and send the data packets to an AP corresponding to the candidate wireless link, so that the AP sends the data packets to the wireless terminal through the candidate wireless link.

10. The apparatus according to claim 7, wherein
the processing module is further to, in response to that a load of each of K wireless links in all wireless links is not greater than the load threshold, wherein K is a positive integer greater than 1, select the K wireless links as candidate wireless links; divide the data packets into K sub-data packets, and respectively send the K sub-data packets to APs corresponding to the K candidate wireless links, so that the APs send the corresponding sub-data packets received by the APs to the wireless terminal.

11. The apparatus according to claim 7 or 8, wherein
the determining module is further to, after obtaining the data packets to be sent to the wireless terminal, obtain priorities of the data packets by querying a configured mapping table based on data features of the data packets, wherein the priorities are high priorities or low priorities, the mapping table comprises a corresponding relationship between a data feature and a priority, and the data feature comprises five-tuple information and/or a data type.

12. The apparatus according to any one of claims 7 to 10, wherein for the at least two wireless links corresponding to the wireless terminal, different wireless links are wireless links between the wireless terminal and a same AP, or the different wireless links are wireless links between the wireless terminal and different APs.

13. An electronic device, comprising: a processor and a machine-readable storage medium, wherein the machine-readable storage medium stores machine-executable instructions capable of being executed by the processor; the processor is to execute the machine-executable instructions to perform the method of any one of claims 1-6.
